# EUROPÄISCHE PATENTSCHRIFT

(11) **EP 3 878 621 B1**
(45) Veröffentlichungstag und Bekanntmachung des Hinweises auf die Patenterteilung: **21.12.2022**
(21) Anmeldenummer: 20163203.1
(22) Anmeldetag: 13.03.2020
(51) Int. Cl.: B29C 45/00, B29C 45/16, B29K 105/12, B29K 105/26

(54) **MEHRKOMPONENTEN-SPRITZGIESSVERFAHREN**
MULTICOMPONENT INJECTION MOULDING METHOD
PROCÉDÉ DE MOULAGE PAR INJECTION À PLUSIEURS COMPOSANTS

(43) Veröffentlichungstag der Anmeldung: 15.09.2021
(73) Patentinhaber: Haidlmair Holding GmbH, 4542 Nussbach (AT)
(72) Erfinder: Wagner, Lukas, 4061 Pasching (AT); Windhager, Willibald, 4591 Molln (AT)
(74) Vertreter: Jell, Friedrich

(56) Entgegenhaltungen:
- EP-A1- 2 492 078
- EP-A2- 0 901 896
- GB-A- 1 339 444
- JP-A- H06 328 507

## Beschreibung

Die Erfindung betrifft ein Mehrkomponenten-Spritzgießverfahren von mindestens zwei, vorzugsweise unterschiedlichen, Kunststoffmaterialien in eine Kavität eines Spritzgießwerkzeugs zur Herstellung eines Spritzgussteils, bei dem das erste Kunststoffmaterial zur Ausbildung einer Hautschicht des Spritzgussteils über zumindest eine erste Heißkanaldüse in die Kavität eingespritzt wird, und sich dadurch in der Kavität zumindest eine Schmelzflussfront ausbildet, und das zweite Kunststoffmaterial zur Ausbildung einer Innenschicht des Spritzgussteils über mindestens eine zweite Heißkanaldüse in die Kavität und in einen, sich noch im fließfähigen Zustand befindlichen Kern des ersten Kunststoffmaterials eingespritzt wird.

Mehrkomponenten-Spritzgießverfahren zur Herstellung von in ihren Abmessungen vergleichsweise kleinen Spritzgussteilen mit einer im Querschnitt sandwichartigen Struktur sind aus dem Stand der Technik bekannt. Merkmale des Oberbegriffs des Anspruchs 1 sind zum Beispiel in der EP 0901896 A2, EP 2492078 A1 und in der DE 69517471 T2 offenbart. Beispielsweise schlägt die DE 69517471 T2 vor, über zwei voneinander getrennte Heißkanaldüsen zwei verschiedene Kunststoffmaterialien in die Kavität eines Spritzgusswerkzeugs einzuspritzen. Hierzu wird zuerst das erste Kunststoffmaterial zur Ausbildung einer Hautschicht am Spritzgussteil über die erste Heißkanaldüse eingespritzt. Dieses erste Kunststoffmaterial bewegt sich von der ersten Heißkanaldüse weg in der Kavität und bildet dabei eine Schmelzflussfront aus, die sich in der Kavität voranschiebt.

Danach wird das zweite Kunststoffmaterial von einer zweiten, zur ersten Heißkanaldüse versetzt angeordneten Heißkanaldüse zur Ausbildung einer Innenschicht am Spritzgussteil eingespritzt. Dies erfolgt durch die Hautschicht in den sich noch im fließfähigen Zustand befindlichen Kern des ersten Kunststoffmaterials.

Sollen größere Spritzgussteile mit Sandwichstruktur hergestellt werden, kommen derartige Mehrkomponenten-Spritzgießverfahren an die Grenzen ihrer Durchführbarkeit - beispielsweise aufgrund langer Fließstrecken und der dam it einhergehenden Gefahr einer Aushärtung des Kerns, was ein Einspritzten des zweiten Kunststoffmaterials behindert. Zudem kann bei derartigen Verfahren eine Ausdünnung der Hautschicht im Anguss auftreten, was Material des Kerns an die Oberfläche dringen lassen kann. Derartige Verfahren können daher eine sandwichartige Struktur an vergleichsweise großen Spritzgussteilen nicht garantieren. Ähnliche Schwierigkeiten treten bei nichtsymmetrischen Spritzgussteilen auf.

Die Erfindung hat sich daher ausgehend vom eingangs geschilderten Stand der Technik die Aufgabe gestellt, ein Mehrkomponenten-Spritzgießverfahren derart zu verändern, dass damit reproduzierbar Spritzgussteile mir sandwichartiger Struktur - und zwar, ohne Einschränkung hinsichtlich ihrer Größe oder Symmetrie - hergestellt werden können.

Außerdem soll das Verfahren einen vergleichsweise hohen Füllgrad an zweitem Kunststoffmaterial ermöglichen, ohne die Gefahr eines Durchstoßens der Außenhaut befürchten zu müssen.

Die Erfindung löst die gestellte Aufgabe durch die Merkmale des Anspruchs 1.

Wird das erste Kunststoffmaterial über zumindest zwei erste Heißkanaldüsen in die Kavität eingespritzt und bilden sich dabei zumindest zwei Schmelzflussfronten aus, die in der Kavität aufeinandertreffen und einen Stoß zwischen einander ausbilden, können längere Fließwege überbrückt werden, als dies bei Mehrkomponenten-Spritzgießverfahren mit nur einer einzigen Schmelzflussfront in der Kavität der Fall ist. Dies garantiert auch bei, in den Abmessungen vergleichsweise großen Spritzgussteilen stets einen ausreichend fließfähigen Kern des ersten Kunststoffs - was ein Einspritzen des zweiten Kunststoffs zulässt, um reproduzierbar eine sandwichartige Struktur am Spritzgussteil zu erzeugen.

Dies insbesondere dann, wenn das zweite Kunststoffmaterial im Bereich dieses Stoßes in die Kavität eingespritzt wird, und damit am, von den ersten Heißkanaldüsen entferntesten Einspritzpunkt das zweite Kunststoffmaterial als Innenschicht eingebracht wird.

Eine sandwichartige Struktur am Spritzgussteil ist damit sichergestellt, auch bei unsymmetrischen Spritzgussteilen, bei denen im Bereich der kürzen Fließwege aufgrund der früheren Füllung dieses Kavitätsbereichs, zweites Kunststoffmaterial nur in begrenzter Menge eingespritzt werden kann.

Zudem ermöglicht das Einspritzen im Bereich des Stoßes, dass ein vergleichsweise hoher Füllgrad an zweitem Kunststoffmaterial am Spritzgussteil reproduzierbar erreicht werden kann. Dies insbesondere, weil im Gegensatz zum Stand der Technik eine Ausdünnung der Hautschicht im Anguss nicht auftreten kann und damit auch nicht befürchtet werden muss, dass das zweite Kunststoffmaterial an die Oberfläche dringt.

Vorzugsweise weisen die ersten Heißkanaldüsen einen Heißkanalverschluss auf, über den das erste Kunststoffmaterial in die Kavität eingespritzt wird. Beispielsweise ermöglicht dies eine besonders exakte Ausbildung der sandwichartigen Struktur am Spritzgussteil. Vorzugsweise ist als Heißkanalverschluss ein Nadelverschluss vorgesehen.

Die zweite Heißkanaldüse kann eine schlitzförmige Düsenöffnung aufweisen, um beispielsweise damit die Taktzeit beim Einbringen von zweitem Kunststoffmaterial zu verkürzen. Zudem kann durch solch eine Düse besonders der Stoß bereit durchbrochen werden.

Die Abfolge des Einspritzens von erstem Kunststoffmaterial und zweitem Kunststoffmaterial erfolgt zeitlich teilweise überlappend, wodurch der Füllgrad und das Verhältnis von Innenschicht, also des zweiten Kunststoffmaterials, zur Hautschicht, also des ersten Kunststoffmaterials, positiv beeinflussbar ist. Beispielsweise können damit Produktfehler am Spritzgussteil vermieden werden. Zudem besteht damit eine erleichterte Möglichkeit den Zeitpunkt des Einspritzens des zweiten Kunststoffmaterials freier einzustellen, damit das Wanddickenprofil des Spritzgussteils zu beeinflussen.

Vorteilhaft wird mithilfe eines, vorzugsweise am Spritzgießwerkzeug angeordneten, Sensors das Zusammentreffen der Schmelzflussfront detektiert. Damit kann reproduzierbar bei Detektion dieses Zusammentreffens der Schmelzflussfronten das zweite Kunststoffmaterial eingespritzt werden, um eine Innenschicht am Spritzgussteil auszubilden.

Weist die Kavität an der zweiten Heißkanaldüse eine Höhe auf, und wird das zweite Kunststoffmaterial nach Ausbildung einer, sich im Wesentlichen über eine gesamte Höhe der Kavität erstreckenden Stoßfläche des Stoßes eingespritzt, ist im Bereich des Angusses am Spritzgussteil die Beeinträchtigung der Hautschicht besonders gut vermeidbar. Höchste Qualität am derart erzeugten Teil kann damit gewährleistet werden.

Dies insbesondere dann, wenn das zweite Kunststoffmaterial eingespritzt wird, wenn die Höhe des sich noch im fließfähigen Zustand befindlichen Kerns des ersten Kunststoffmaterials die Bedingung 0,1*h ≤ hk ≤ 0,8*h erfüllt - wobei h die Höhe der Kavität an der zweiten Heißkanaldüse ist und damit die Wanddicke am Spritzgussteil darstellt.

Vorzugsweise dringt das zweite Kunststoffmaterial von der Heißkanaldüse aus gesehen an der Stoßfläche des Stoßes entlang fließend in das erste Kunststoffmaterial ein. Damit kann ein Durchbrechen der Stoßfläche von einer Schmelzflussfront zur anderen Schmelzflussfront sichergestellt werden - und sich ein gleichmäßiges Fluten des fließfähigen Kerns des ersten Kunststoffmaterials von der Stoßfläche aus ergeben. Dies kann etwa die Schichtdicke der verschiedenen Schichten am Spritzgussteil vergleichsmäßigen.

Insbesondere kann damit gewährleisten werden, dass das zweite Kunststoffmaterial den Stoß zumindest in Längserstreckung der Kavität durchbricht.

Vorzugsweise sind das erste Kunststoffmaterial ein neu hergestellter Kunststoff und/oder das zweite Kunststoffmaterial ein Recycling-Kunststoff. Das erste Kunststoffmaterial ist vorzugsweise ein neu hergestellter Kunststoff, um damit am Spritzgussteil eine hervorragende, insbesondere einheitliche, Oberfläche zu schaffen.

Vorzugsweise ist das zweite Kunststoffmaterial ein faserverstärkter Kunststoff, um damit die Festigkeit des Spritzgussteils zu erhöhen. Auch können derart anhand des erfindungsgemäßen Verfahrens standfest eine Bindenaht verhindert und eine durchgehende Faserverstärkung auch in einem Stoß der Schmelzflussfronten gewährleistet werden.

In den Figuren ist beispielsweise der Erfindungsgegenstand anhand einer Ausführungsvariante näher dargestellt. Es zeigen
- Fig. 1: eine aufgerissene Seitenansicht auf eine Kavität eines Spritzgusswerkzeugs mit eingespritzten Kunststoffmaterialien und
- Fig. 2: eine vergrößerte Detailansicht auf die Kavität der Fig. 1,
- Fig. 3: eine Draufsicht auf die Kavität der Fig. 1 und
- Fig. 4: eine Schnittansicht zu einem Spritzgussteil, urgeformt in der Kavität geschnitten nach IV-IV der Fig. 2.

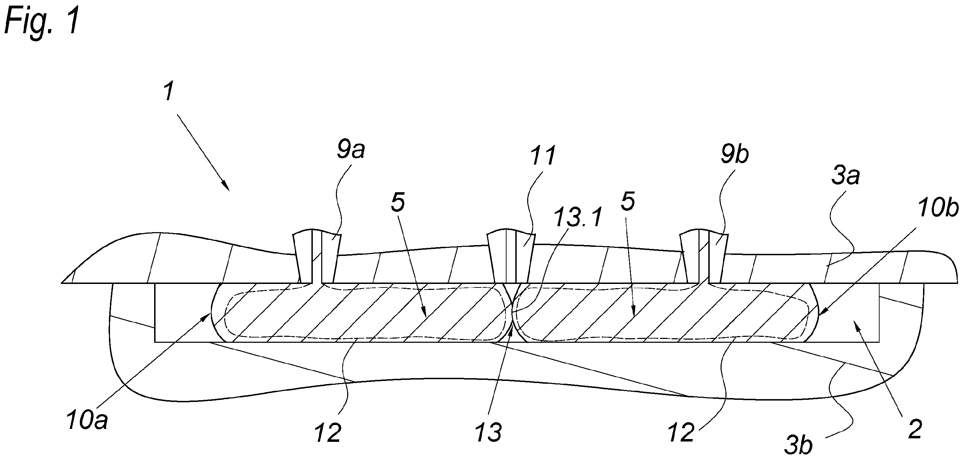

Nach den Figuren 1 bis 3 wird beispielsweise ein Spritzgießwerkzeug 1 mit einer Kavität 2 zwischen einem ersten Werkzeugbauteil 3a und einem zweiten Werkzeugbauteil 3b gezeigt.

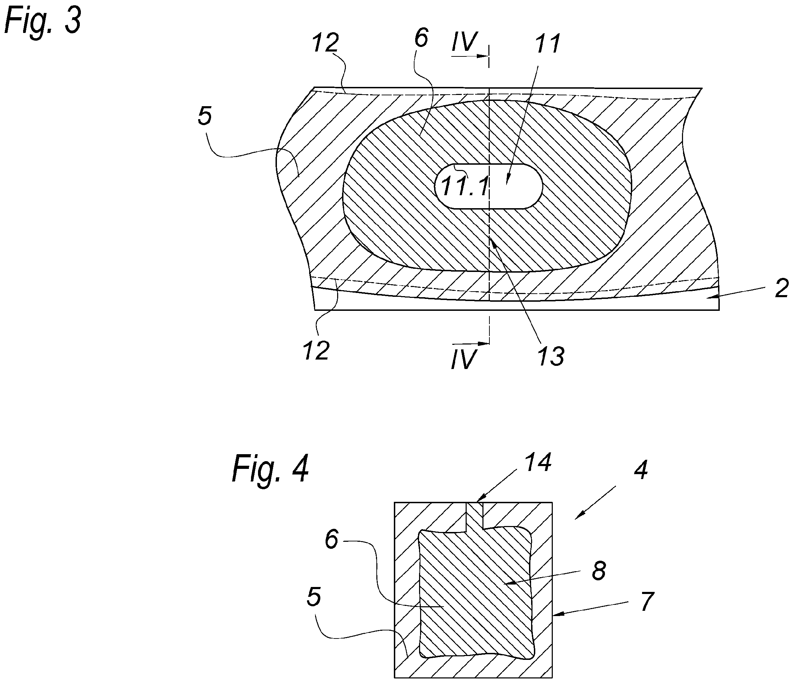

In diese Kavität 2 wird ein nach Fig. 4 im Querschnitt dargestelltes Spritzgussteil 4 urgeformt, das zwei Kunststoffmaterialien 5, 6 aufweist - wovon das erste Kunststoffmaterial 5 die Hautschicht 7 und das zweite Kunststoffmaterial 6 eine Innenschicht 8 des Spritzgussteils 4 bilden. Diese Innenschicht 8 ist im dargestellten Fall eines zweischichtigen Spritzgussteils 4 eine Kernschicht.

Beispielsweise handelt es sich bei den beiden Kunststoffmaterialien 5, 6 um Thermoplaste mit unterschiedlichen Eigenschaften - allerdings sind andere Kunststoffmaterialien selbstverständlich denkbar. Vorstellbar ist außerdem, dass weitere Kunststoffmaterialien eingespritzt werden, und am Spritzgussteil 4 weitere Innenschichten ausgebildet werden, um also ein Spritzgussteil 4 mit mehr als zwei Schichten herzustellen.

Solch ein mehrschichtiges Spritzgussteil 4 wird durch ein Mehrkomponenten-Spritzgießverfahren ermöglicht. Hierzu wird das erste Kunststoffmaterial 5 über zumindest eine erste Heißkanaldüse 9a, 9b in die Kavität 2 eingespritzt. Dies bildet in der Kavität 2 zumindest eine Schmelzflussfront 10a, 10b aus - wie in Fig. 3 dargestellt. Daraufhin wird das zweite Kunststoffmaterial 6 in die Kavität 2 über eine zweite Heißkanaldüse 11 eingespritzt - und zwar in einen, sich noch im fließfähigen Zustand befindlichen Kern 12 des ersten Kunststoffmaterials 5, was beispielsweise auch aus dem Sandwich-Spritzgießen bekannt ist.

Bei den ersten Heißkanaldüsen 9a, 9b handelt es sich im Ausführungsbeispiel um Nadelverschlussdüsen, die eine kreisrunde Düsenöffnung aufweisen.

Die zweite Heißkanaldüse 11 weist eine schlitzförmige Düsenöffnung 11.1 in der Art einer Breitschlitzdüse auf. Zudem umfasst diese zweite Heißkanaldüse 11 einen Heißkanalverschluss.

Das erste und zweite Kunststoffmaterial 5, 6 sind im Ausführungsbeispiel unterschiedliche Kunststoffe. So ist das erste Kunststoffmaterial 5 ein neu hergestellter Kunststoff, also ein Kunststoff ohne Anteil an Recycling-Kunststoff, und das zweite Kunststoffmaterial 6 ein Recycling-Kunststoff mit beispielsweise einer Faserverstärkung.

Erfindungsgemäß wird das erste Kunststoffmaterial 5 über zwei erste Heißkanaldüsen 9a, 9b in die Kavität 2 eingespritzt. Dadurch bilden sich zwei Schmelzflussfronten 10a, 10b aus, die in der Kavität 2 aufeinandertreffen und eine Stoß 13 zwischen einander ausbilden - wie in Fig. 1 zu erkennen.

Besonders zeichnet sich die Erfindung dadurch aus, dass in weiterer Folge das zweite Kunststoffmaterial 6 im Bereich des Stoßes 13 in die Kavität 2 eingespritzt wird - wie anhand des Anspritzpunkts 14 in der Fig. 4 erkennbar ist.

Dies stellt eine durchgehende sandwichartige Struktur am Spritzgussteil 4 sicher - und zwar selbst bei einem in den Abmessungen vergleichsweise großen oder unsymmetrischen Spritzgussteil 4.

Außerdem wird mit zeitlich teilweiser Überlappung nach dem ersten Kunststoffmaterial 5 das zweite Kunststoffmaterial 6 eingespritzt, was zu einem exakten Spritzgussteil 4 führt.

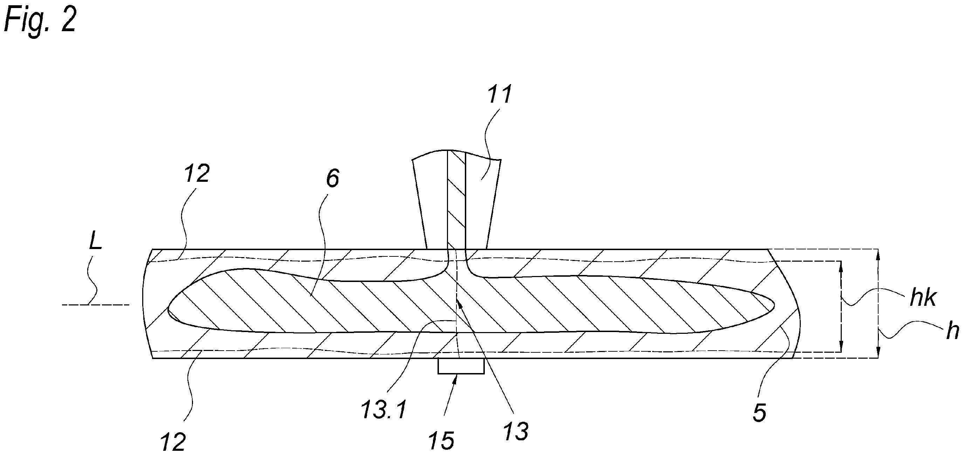

Wie zudem den Figuren 2 und 3 zu entnehmen, wird nach Ausbildung einer sich über die gesamte Höhe h der Kavität 2 (an der zweiten Heißkanaldüse 11, also vor der zweiten Heißkanaldüse 11) erstreckenden Stoßfläche 13 das zweite Kunststoffmaterial 6 eingespritzt, was am fertigen Spritzgussteil 4 eine geschlossene Hautschicht 7 garantiert.

Der Einspritzzeitpunkt wird so gewählt, dass das zweite Kunststoffmaterial 6 eingespritzt wird, wenn die Höhe hk des sich noch im fließfähigen Zustand befindlichen Kerns 12 des ersten Kunststoffmaterials 5 die Bedingung 0,1*h (10% von h) ≤ hk ≤ 0,8*h (80% von h) erfüllt. Gemäß Fig. 2 beträgt hk ca. 76 % der Höhe h der Kavität 2 im Bereich vor der zweiten Heißkanaldüse 11, welche Höhe h in diesem Bereich auch der Wandstärke des Spritzgussteil 4 entspricht.

Dies ist umso vorteilhafter, wenn das zweite Kunststoffmaterial 6 von der Heißkanaldüse 11 aus gesehen an der Stoßfläche 13 entlang fließend in das erste Kunststoffmaterial 5 eindringt. Damit wird auch die Stoßfläche 13 in Längserstreckung L der Kavität 2 standfest durchbrochen.

Die Heißkanaldüse 11 weist zudem einen Sensor 15 auf, der das Zusammentreffen der Schmelzflussfronten 10a, 10b detektiert. Damit kann das zweite Kunststoffmaterial 6 zum exakten Zeitpunkt in das erste Kunststoffmaterial 5 eingespritzt werden. Damit ist eine hohe Reproduzierbarkeit im Verfahren erreichbar. Als Sensor 15 ist beispielsweise ein Ultraschallsensor, Temperatursensor etc. vorstellbar, das Zusammentreffen der Schmelzflussfronten 10a, 10b zu detektieren.

## Patentansprüche

1. Mehrkomponenten-Spritzgießverfahren von mindestens zwei, vorzugsweise unterschiedlichen, Kunststoffmaterialien (5, 6) in eine Kavität (2) eines Spritzgießwerkzeugs (1) zur Herstellung eines Spritzgussteils (4), bei dem
das erste Kunststoffmaterial (5) zur Ausbildung einer Hautschicht (7) des Spritzgussteils (4) über zumindest eine erste Heißkanaldüse (9a, 9b) in die Kavität (2) eingespritzt wird, und sich dadurch in der Kavität (2) zumindest eine Schmelzflussfront (10a, 10b) ausbildet, und
das zweite Kunststoffmaterial (6) zur Ausbildung einer Innenschicht (8) des Spritzgussteils (4) über mindestens eine zweite Heißkanaldüse (11) in die Kavität (2) und in einen, sich noch im fließfähigen Zustand befindlichen Kern (12) des ersten Kunststoffmaterials (5) eingespritzt wird,
**dadurch gekennzeichnet, dass**
das erste Kunststoffmaterial (5) über zumindest zwei erste Heißkanaldüsen (9a, 9b) in die Kavität (2) eingespritzt wird und sich dabei zumindest zwei Schmelzflussfronten (10a, 10b) ausbilden, die in der Kavität (2) aufeinandertreffen und einen Stoß (13) zwischen einander ausbilden,
und dass das zweite Kunststoffmaterial (6) im Bereich dieses Stoßes (13) in die Kavität (2) eingespritzt wird.

2. Mehrkomponenten-Spritzgießverfahren nach Anspruch 1, **dadurch gekennzeichnet, dass** die ersten Heißkanaldüsen (9a, 9b) einen Heißkanalverschluss, beispielsweise Nadelverschluss, aufweist, über den das erste Kunststoffmaterial (5, 6) in die Kavität (2) eingespritzt wird.

3. Mehrkomponenten-Spritzgießverfahren nach Anspruch 1 oder 2, **dadurch gekennzeichnet, dass** die zweite Heißkanaldüse (11) eine schlitzförmige Düsenöffnung (11.1) aufweist.

4. Mehrkomponenten-Spritzgießverfahren nach einem der Ansprüche 1 bis 3, **dadurch gekennzeichnet, dass** die Abfolge des Einspritzens von erstem Kunststoffmaterial (5) und zweitem Kunststoffmaterial (6) zeitlich teilweise überlappend erfolgt.

5. Mehrkomponenten-Spritzgießverfahren nach einem der Ansprüche 1 bis 4, **dadurch gekennzeichnet, dass** mithilfe eines, vorzugsweise am Spritzgießwerkzeug (1) angeordneten, Sensors (15) das Zusammentreffen der Schmelzflussfronten (10a, 10b) detektiert und im Falle der Detektion dieses Zusammentreffens das zweite Kunststoffmaterial (6) eingespritzt wird.

6. Mehrkomponenten-Spritzgießverfahren nach einem der Ansprüche 1 bis 5, **dadurch gekennzeichnet, dass** die Kavität (2) an der zweiten Heißkanaldüse (11) eine Höhe (h) aufweist, und dass das zweite Kunststoffmaterial (6) nach Ausbildung einer, sich im Wesentlichen über eine gesamte Höhe (h) der Kavität (2) erstreckenden Stoßfläche (13.1) des Stoßes (13) eingespritzt wird.

7. Mehrkomponenten-Spritzgießverfahren nach einem der Ansprüche 1 bis 6, **dadurch gekennzeichnet, dass** die Kavität (2) an der zweiten Heißkanaldüse (11) eine Höhe (h) aufweist, und dass das zweite Kunststoffmaterial (6) eingespritzt wird, wenn die Höhe (hk) des sich noch im fließfähigen Zustand befindlichen Kerns (12) des ersten Kunststoffmaterials (5) die Bedingung 0,1*h ≤ hk ≤ 0,8*h erfüllt.

8. Mehrkomponenten-Spritzgießverfahren nach einem der Ansprüche 1 bis 7, **dadurch gekennzeichnet, dass** das zweite Kunststoffmaterial (6) von der zweiten Heißkanaldüse (11) aus gesehen an einer Stoßfläche (13.1) des Stoßes (13) entlang fließend in das erste Kunststoffmaterial (5) eindringt.

9. Mehrkomponenten-Spritzgießverfahren nach einem der Ansprüche 1 bis 8, **dadurch gekennzeichnet, dass** das zweite Kunststoffmaterial (6) den Stoß (13) zumindest in Längserstreckung (L) der Kavität (2) durchbricht.

10. Mehrkomponenten-Spritzgießverfahren nach einem der Ansprüche 1 bis 9, **dadurch gekennzeichnet, dass** das erste Kunststoffmaterial (5) ein neu hergestellter Kunststoff und/oder das zweite Kunststoffmaterial (6) ein Recycling-Kunststoff sind.

11. Mehrkomponenten-Spritzgießverfahren nach einem der Ansprüche 1 bis 10, **dadurch gekennzeichnet, dass** das zweite Kunststoffmaterial (6) ein faserverstärkter Kunststoff ist.

## Claims

1. Multi-component injection molding method of at least two, preferably different, plastic materials (5, 6) in a cavity (2) of an injection molding tool (1) for the production of an injection molded part (4), in which
the first plastic material (5) is injected via at least one first hot runner nozzle (9a, 9b) into the cavity (2) for forming a skin layer (7) of the injection molded part (4), and thereby at least one melt flow front (10a, 10b) is formed in the cavity (2), and the second plastic material (6) for forming an inner layer (8) of the injection molded part (4) is injected via at least one second hot runner nozzle (11) into the cavity (2) and into a core (12) of the first plastic material (5) which is still in the flowable state,
**characterized in that**
the first plastic material (5) is injected into the cavity (2) via at least two first hot runner nozzles (9a, 9b) and in this case at least two melt flow fronts (10a, 10b) are formed which meet in the cavity (2) and form an abutment (13) between them, and **in that** the second plastic material (6) is injected into the cavity (2) in the region of this abutment (13).

2. Multicomponent injection molding method according to claim 1, **characterized in that** the first hot runner nozzles (9a, 9b) have a hot runner closure, for example valve gate, via which the first plastic material (5, 6) is injected into the cavity (2).

3. Multicomponent injection molding method according to claim 1 or 2, **characterized in that** the second hot runner nozzle (11) has a slot-shaped nozzle opening (11.1).

4. Multicomponent injection molding method according to one of claims 1 to 3, **characterized in that** the sequence of injection of first plastic material (5) and second plastic material (6) is carried out partially overlapping in time.

5. Multicomponent injection molding method according to one of claims 1 to 4, **characterized in that** the meeting of the melt flow fronts (10a, 10b) is detected with the aid of a sensor (15), preferably arranged on the injection molding tool (1), and the second plastic material (6) is injected if this meeting is detected.

6. Multicomponent injection molding method according to one of claims 1 to 5, **characterized in that** the cavity (2) at the second hot runner nozzle (11) has a height (h), and **in that** the second plastic material (6) is injected after formation of an abutment surface (13.1) of the abutment (13) extending essentially over an entire height (h) of the cavity (2).

7. Multi-component injection molding method according to one of claims 1 to 6, **characterized in that** the cavity (2) has a height (h) at the second hot runner nozzle (11), and **in that** the second plastic material (6) is injected when the height (hk) of the core (12) of the first plastic material (5), which is still in the flowable state, satisfies the condition 0.1^{∗}h≤hk≤0.8^{∗}h.

8. Multicomponent injection molding method according to one of claims 1 to 7, **characterized in that** the second plastic material (6), as seen from the second hot runner nozzle (11), penetrates in a flowing manner into the first plastic material (5) along an abutment surface (13.1) of the abutment (13).

9. Multicomponent injection molding method according to one of claims 1 to 8, **characterized in that** the second plastic material (6) breaks through the abutment (13) at least in the longitudinal extension (L) of the cavity (2).

10. Multicomponent injection molding method according to one of claims 1 to 9, **characterized in that** the first plastic material (5) is a newly produced plastic and/or the second plastic material (6) is a recycled plastic.

11. Multicomponent injection molding method according to one of claims 1 to 10, **characterized in that** the second plastic material (6) is a fiber-reinforced plastic.

## Revendications

1. Procédé de moulage par injection à plusieurs composants d'au moins deux matières plastiques (5, 6), de préférence différentes, dans une cavité (2) d'un outil de moulage par injection (1) pour la fabrication d'une pièce moulée par injection (4), dans lequel
pour former une couche de peau (7) de la pièce moulée par injection (4), la première matière plastique (5) est injectée dans la cavité (2) par au moins une première buse à canal chaud (9a, 9b) et il se forme ainsi dans la cavité (2) au moins un front de masse fondue (10a, 10b), et
pour former une couche intérieure (8) de la pièce moulée par injection (4), la deuxième matière plastique (6) est injectée dans la cavité (2) et dans un noyau (12) de la première matière plastique (5) se trouvant encore à l'état fluide par au moins une deuxième buse à canal chaud (11),
**caractérisé en ce que**
la première matière plastique (5) est injectée dans la cavité (2) par au moins deux premières buses à canal chaud (9a, 9b) et il se forme ainsi au moins deux fronts de masse fondue (10a, 10b) qui se rencontrent dans la cavité (2) et forment un joint (13) entre eux,
et **en ce que** la deuxième matière plastique (6) est injectée dans la cavité (2) dans la zone de ce joint (13).

2. Procédé de moulage par injection à plusieurs composants selon la revendication 1, **caractérisé en ce que** les premières buses à canal chaud (9a, 9b) présentent un obturateur de canal chaud, par exemple un obturateur à aiguille, par lequel la première matière plastique (5, 6) est injectée dans la cavité (2) .

3. Procédé de moulage par injection à plusieurs composants selon la revendication 1 ou 2, **caractérisé en ce que** la deuxième buse à canal chaud (11) présente une ouverture de buse (11.1) en forme de fente.

4. Procédé de moulage par injection à plusieurs composants selon l'une des revendications 1 à 3, **caractérisé en ce que** la séquence d'injection de la première matière plastique (5) et de la deuxième matière plastique (6) s'effectue avec un chevauchement partiel dans le temps.

5. Procédé de moulage par injection à plusieurs composants selon l'une des revendications 1 à 4, **caractérisé en ce que** la rencontre des fronts de masse fondue (10a, 10b) est détectée à l'aide d'un capteur (15), de préférence disposé sur l'outil de moulage par injection (1) et **en ce que** la deuxième matière plastique (6) est injectée en cas de détection de cette rencontre.

6. Procédé de moulage par injection à plusieurs composants selon l'une des revendications 1 à 5, **caractérisé en ce que** la cavité (2) présente une hauteur (h) au niveau de la deuxième buse à canal chaud (11), et **en ce que** la deuxième matière plastique (6) est injectée après formation d'une surface de joint (13.1) du joint (13) s'étendant sensiblement sur une hauteur totale (h) de la cavité (2).

7. Procédé de moulage par injection à plusieurs composants selon l'une des revendications 1 à 6, **caractérisé en ce que** la cavité (2) présente une hauteur (h) au niveau de la deuxième buse à canal chaud (11), et **en ce que** la deuxième matière plastique (6) est injectée lorsque la hauteur (hk) du noyau (12) de la première matière plastique (5) se trouvant encore à l'état fluide remplit la condition 0,1*h ≤ hk ≤ 0,8*h.

8. Procédé de moulage par injection à plusieurs composants selon l'une des revendications 1 à 7, **caractérisé en ce que** la deuxième matière plastique (6), vue depuis la deuxième buse à canal chaud (11), pénètre dans la première matière plastique (5) en s'écoulant le long d'une surface de joint (13.1) du joint (13) .

9. Procédé de moulage par injection à plusieurs composants selon l'une des revendications 1 à 8, **caractérisé en ce que** la deuxième matière plastique (6) traverse le joint (13) au moins dans l'extension longitudinale (L) de la cavité (2).

10. Procédé de moulage par injection à plusieurs composants selon l'une des revendications 1 à 9, **caractérisé en ce que** la première matière plastique (5) est une matière plastique nouvellement fabriquée et/ou la deuxième matière plastique (6) est une matière plastique recyclée.

11. Procédé de moulage par injection à plusieurs composants selon l'une des revendications 1 à 10, **caractérisé en ce que** la deuxième matière plastique (6) est une matière plastique renforcée par des fibres.
